# FASCICULE DE BREVET EUROPEEN

(11) **EP 1 031 113 B1**
(45) Date de publication et mention de la délivrance du brevet: **16.01.2002**
(21) Numéro de dépôt: 98950176.2
(22) Date de dépôt: 22.10.1998
(51) Int. Cl.: G06K 19/06

(54) **PROCEDE D'IDENTIFICATION D'UNE IMAGE OU D'UN DOCUMENT**
VEFAHREN ZUR IDENTIFIZIERUNG EINES BILDES ODER EINES DOKUMENTES
METHOD FOR IDENTIFYING AN IMAGE OR A DOCUMENT

(30) Priorité: 19.11.1997 FR 9714512
(43) Date de publication de la demande: 30.08.2000
(73) Titulaire: Rivaillier, Jacques, 78114 Magny les Hameaux (FR); Salomon, Georges, 60260 Lamorlaye (FR)
(72) Inventeur: Rivaillier, Jacques, 78114 Magny les Hameaux (FR); Salomon, Georges, 60260 Lamorlaye (FR)
(74) Mandataire: Breese, Pierre
(86) Numéro de dépôt international: FR9802259
(87) Numéro de publication internationale: WO9926196

(56) Documents cités:
- EP-A- 0 312 026
- EP-A- 0 439 682
- US-A- 5 337 361
- US-A- 5 635 698
- US-A- 5 644 408

## Description

La présente invention concerne le domaine du marquage et de l'authentification d'images ou de documents.

On connaît diverses solutions de marquages tels que les codes-barre ou codes plus élaborés comme le code ECO décrit dans le brevet français FR 92/00706.

Un des inconvénients des solutions de l'art antérieur concerne la lecture du code. Lorsque le code est complexe, et donne lieu à une représentation graphique bidimensionnelle, la lecture peut devenir problématique. Il est certes possible de pallier à cette difficulté par des traitement d'image élaborés. Toutefois, cela augmente considérablement le coût des équipements de contrôle.

On connaît également un procédé et un dispositif de décodage d'un code à barres bidimensionnel à l'aide d'une camera CCD/CMD décrit dans le brevet US5337361. Le brevet US5337361 expose un procédé d'identification d'une image ou d'un document consistant à insérer dans ladite image ou à apposer sur ledit document la représentation graphique d'un code sous une forme matricielle (un code à barres ayant deux dimensions de type code PDF417). Le code PDF417 comprend des indicateurs de rangée L0,L1 ..., R0,R1 ... et chaque indicateur indique le numéro de la rangée du code. Le nombre de rangées du code est indiqué dans chaque rangée sauf chaque troisième rangée. Le brevet US5635698 décrit un procédé d'identification consistant à apposer une forme matricielle sur un document portant une image. Le brevet US5635698 expose un procédé d'identification d'un document consistant à apposer sur ledit document la représentation graphique d'un code sous une forme matricielle (un code à barres ayant deux dimensions par exemple le code PDF417). Le code PDF417 comprend des sections ayant des indicateurs de rangée. Chaque indicateur indique le numéro de la rangée (séquence) du code et le nombre de rangées (séquences) du code.

L'invention vise à répondre aux inconvénients des marquages de l'art antérieur par un procédé ne nécessitant pas le recours à des moyens lourds de traitement de l'image et de correction d'erreur.

A cet effet, l'invention concerne plus particulièrement un procédé d'identification d'une image ou d'un document selon la revendication 1.

Avantageusement, le code comprend une séquence initiale comportant une information relative au format du code.

Selon une variante particulière, le code est formé d'une entité précisant notamment le formatage général du code, d'au moins un bloc "caractère" et d'au moins un bloc "binaire".

Selon un mode de mise en oeuvre préféré, les caractères de services propres au format du code sont constitués par des caractères rarement utilisés par la partie informative du code.

Selon une variante avantageuse, le code est associé à l'image ou au document sous forme d'une représentation graphique matricielle formée d'un bloc de N rangées de M cases, chaque rangée correspondant à l'une des séquences.

Selon une application particulière, le code est inséré dans une zone de l'image et forme un code de scellement de ladite image.

Selon une application, le code est inséré dans une zone d'une télécopie et constitue un code de scellement du document transmis par télécopie.

Selon une autre application, le code est inséré dans une zone d'une télécopie et s'ajoute ou se substitue à une partie au moins du document original transmis par télécopie.

L'invention sera mieux comprise à la lecture de la description qui suit, se référant à des exemples non limitatifs.

Le premier exemple concerne le scellement d'un document destiné à être transmis par télécopie. Le scellement peut être réalisé par calcul d'une signature "numérique" à partir d'une partie du document, par exemple sa signature manuscrite. Le calcul de cette signature est réalisée de façon connue à l'aide d'un programme de cryptage, par exemple DES ou tout autre algorithme à clé publique et à clé privée. Le résultat de ce calcul constitue la signature numérique exprimé en caractères alphanumériques. Ce résultat est formaté pour permettre une retranscription sur le document sous forme de bloc graphique.

Le formatage des images d'octets doit permettre de conserver la "pagination" de l'information de départ, c'est-à-dire de retrouver à la lecture, tels que prévus à l'origine :
- les rangées de caractères, dans le cas d'écriture codée rangée par rangée (ex: ECO);
- les blocs d'Information successifs, c'est-à-dire: les débuts et les fins de chacun d'eux ainsi que leurs caractéristiques (caractère/binaire, simple/mixte/complexe, clair/chiffré; etc..).

La signature numérique est traduite en un code selon un format particulier, permettant :
- la correction d'erreurs, grâce notamment à la mise en oeuvre de codes autocorrecteurs,
- de garantir l'intégrité de ces informations en utilisant une technique de scellement d'une partie ou de la totalité de ces informations, de préférence rangée par rangée ;
- authenticité de l'auteur par codage de sa signature ou de toute autre donnée personnelle.

Un exemple de format de transcription graphique du code résultant de la signature numérique, adapté à la mise en oeuvre de l'invention est indiqué dans ce qui suit:

| **Première rangée** | | | |
|---|---|---|---|
| | **Signification** | **Octet direct** | **complémentaire** |
| Caractère 1 | Début de rangée | BELL | c153 |
| Caractère 2 | Numéro de rangée | normal | normal |
| Caractère 3 | Nombre de rangées | normal | normal |
| Caractère 4 | Type de format | normal | normal |
| caractères suivants | Entête de longueur variable | | |
| Caractères suivants | Début de bloc simple | 241 | c153 |
| dernier caractère | Fin de rangée | BELL | c86 |

Le caractère 4 désignant le format du code peut être codé de la façon suivante :
- un caractère prédéterminé, choisi parmi les caractères peu usités indique que la séquence de caractère qui suit détermine un format non standard ;
- un caractère autre que le caractère prédéterminé susvisé désigne un format standard externe, mémorisé dans un fichier adressable, avec 1 = caractère français + image jpeg,....

La rangée peut se terminer par des caractère CRC retour de chariot.

| **N**^{**ème**} **rangée** | | | |
|---|---|---|---|
| | **Signification** | **Octet direct** | **complémentaire** |
| Caractère 1 | Début de rangée | BELL | c153 |
| Caractère 2 | Numéro de rangée | normal | normal |
| Caractère 3 | Nombre de rangées | normal | normal |
| Caractères suivants | Début de bloc simple | 241 | c153 |
| dernier caractère | Fin de rangée | BELL | c86 |

| **Dernière rangée** | | | |
|---|---|---|---|
| | **Signification** | **Octet direct** | **complémentaire** |
| Caractère 1 | Début de rangée | BELL | c153 |
| Caractère 2 | Numéro de rangée | normal | normal |
| Caractère 3 | Nombre de rangées | normal | normal |
| Caractères suivants | octets d'information | normaux | normaux |
| Caractère suivant | Fin de bloc | 241 | c86 |
| Caractère suivant | Fin de rangée | BELL | c86 |
| Derniers caractères | | CRC | |

Si la rangée n'est pas complète, elle est remplie de caractères aléatoires.

Si le message tient sur une seule rangée (par exemple, codage d'un identifiant) le numéro de la rangée est alors 0, suivi du contenu informatif.

Par ailleurs, les images d'octets peuvent être logées (incrustées) dans des parties d'images (notamment de photographies numériques) pour garantir l'intégrité, la confidentialité, l'authenticité. (signature codée) et des informations diverses comme réglages, date, auteur, sujet ... grâce à la possibilité offerte par les images d'octets de sceller, de chiffrer, de compresser les octets.

La représentation graphique du code est un bloc matriciel de NxM cases organisé en rangées consécutives. La lecture d'une rangée permet de déterminer la structure du code, et notamment le nombre de rangées et le quantième de la rangée en cours de lecture.

Ce bloc peut être imprimé sur le document destiné à être télécopié, ou être inséré dans une image numérique ou graphique. La vérification de l'intégrité et de l'authenticité du document et de l'image s'effectue en recalculant le code en fonction des éléments graphiques communiqués, et en comparant le code ainsi calculé avec le code dont la représentation graphique figure sur le document ou dans l'image.

## Revendications

1. Procédé d'identification d'une image ou d'un document consistant à insérer dans ladite image ou à apposer sur ledit document la représentation graphique d'un code sous une forme matricielle, le code comprenant des séquences consécutives comportant chacune une information relative au numéro d'ordre de la séquence et une information relative au nombre de séquences, et le code comprenant une partie informative calculée à partir d'une signature de l'image ou du document auquel le code est associé.

2. Procédé d'identification d'une image ou d'un document selon la revendication 1 **caractérisé en ce que** le code comprend une séquence initiale comportant une information relative au format du code.

3. Procédé d'identification d'une image ou d'un document selon la revendication 1 ou 2 **caractérisé en ce que** le code est formé d'une entité précisant, notamment, le formatage général du code, d'au moins un bloc "caractère" et d'au moins un bloc "binaire".

4. Procédé d'identification d'une image ou d'un document selon l'une quelconque des revendications précédentes **caractérisé en ce que** les caractères de services propres au format du code sont constitués par des caractères rarement utilisés par la partie informative du code.

5. Procédé d'identification d'une image ou d'un document selon l'une quelconque des revendications précédentes **caractérisé en ce que** le code est associé à l'image ou au document sous forme d'une représentation graphique matricielle formée d'un bloc de N rangées de M cases, chaque rangée correspondant à l'une des séquences.

6. Procédé d'identification d'une image ou d'un document selon l'une quelconque des revendications précédentes **caractérisé en ce que** le code est inséré dans une zone de l'image et forme un code de scellement de ladite image, et/ou une caractérisation de l'image.

7. Procédé d'identification d'une image ou d'un document selon l'une quelconque des revendications précédentes **caractérisé en ce que** le code est inséré dans une zone d'une télécopie et constitue un code de scellement et/ou partie du contenu du document transmis par télécopie.

## Patentansprüche

1. Verfahren zur Identifizierung eines Bildes oder eines Dokumentes, daraus bestehend, dass die grafische Darstellung eines Codes in Matrixform in das Bild eingefügt oder dem Dokument aufgeprägt wird, wobei der Code aufeinanderfolgende Sequenzen umfasst, die jeweils eine Information bezüglich der laufenden Nummer der Sequenz und eine Information bezüglich der Anzahl der Sequenzen beinhaltet, und wobei der Code einen Informationsteil umfasst, der von einer Unterschrift des Bildes oder des Dokumentes, zu dem der Code gehört, ausgerechnet wurde.

2. Verfahren zur Identifizierung eines Bildes oder eines Dokumentes nach Anspruch 1, **dadurch gekennzeichnet, dass** der Code eine Anfangssequenz umfasst, die eine Information bezüglich des Codeformats beinhaltet.

3. Verfahren zur Identifizierung eines Bildes oder eines Dokumentes nach Anspruch 1 oder 2, **dadurch gekennzeichnet, dass** der Code aus einer Instanz gebildet wird, die insbesondere die allgemeine Formatierung des Codes angibt, bestehend aus mindestens einem "Zeichen"-Block und mindestens einem "Binär-"Block.

4. Verfahren zur Identifizierung eines Bildes oder eines Dokumentes nach einem der vorstehenden Ansprüche, **dadurch gekennzeichnet, dass** die dem Codeformat eigenen Dienstzeichen aus Zeichen bestehen, die selten vom Informationsteil des Codes verwendet werden.

5. Verfahren zur Identifizierung eines Bildes oder eines Dokumentes nach einem der vorstehenden Ansprüche, **dadurch gekennzeichnet, dass** der Code als grafische Matrixdarstellung, die aus einem Block mit N Reihen von M Feldern besteht, wobei jede Reihe einer der Sequenzen entspricht, mit dem Bild oder dem Dokument verknüpft wird.

6. Verfahren zur Identifizierung eines Bildes oder eines Dokumentes nach einem der vorstehenden Ansprüche, **dadurch gekennzeichnet, dass** der Code in einem Bereich des Bildes eingefügt wird und einen Siegelcode für das Bild und/oder eine Kennzeichnung des Bildes darstellt.

7. Verfahren zur Identifizierung eines Bildes oder eines Dokumentes nach einem der vorstehenden Ansprüche, **dadurch gekennzeichnet, dass** der Code in einem Bereich eines Telefax eingefügt wird und einen Siegelcode und/oder einen Teil des Inhalts des als Telefax übertragenen Dokuments darstellt.

## Claims

1. A method for identification of an image or a document consisting of inserting a graphic presentation of a code in matrix form into the said image or onto the said document, the code comprising consecutive sequences each containing information about the sequence order number and information about the number of sequences, the code comprising an information part calculated from a signature of the image or the document with which the code is associated.

2. A method for identification of an image or a document according to claim 1, **characterised in that** the code comprises an initial sequence containing information about the code format.

3. A method for identification of an image or a document according to claim 1 or 2, **characterised in that** the code is formed from an entity, in particular specifying the general format of the code, with at least one "character" block and at least one "binary" block.

4. A method for identification of an image or a document according to any one of the previous claims, **characterised in that** the characters used in services specific to the code format are characters that are rarely used in the information part of the code.

5. A method for identification of an image or a document according to any one of the previous claims, **characterised in that** the code is associated with the image or the document in the form of a matrix graphic presentation formed from a block of N rows of M boxes, each row corresponding to one of the sequences.

6. A method for identification of an image or a document according to any one of the previous claims, **characterised in that** the code is inserted in an area of the image and forms a seal code for the said image and/or a characterization of the image.

7. A method for identification of an image or a document according to any one of the previous claims, **characterised in that** the code is inserted in an area of a fax and forms a seal code and/or part of the contents of the document transmitted by fax.
